# EUROPEAN PATENT SPECIFICATION

(11) **EP 1 465 384 B1**
(45) Date of publication and mention of the grant of the patent: **05.07.2017**
(21) Application number: 04007648.1
(22) Date of filing: 30.03.2004
(51) Int. Cl.: H04L 29/06

(54) **COMMUNICATION DEVICE AND PROGRAM**
KOMMUNIKATIONSVORRICHTUNG UND PROGRAMM
DISPOSITIF DE COMMUNICATION ET PROGRAMME

(30) Priority: 31.03.2003 JP 2003097143
(43) Date of publication of application: 06.10.2004
(73) Proprietor: NTT DoCoMo, Inc., Tokyo 100-6150 (JP)
(72) Inventor: Ichikawa, Yuichi, 2-chome Chiyoda-ku Tokyo 100-6150 (JP); Naruse, Naoki, 2-chome Chiyoda-ku Tokyo 100-6150 (JP); Oi, Tatsuro, 2-chome Chiyoda-ku Tokyo 100-6150 (JP); Watanabe, Nobuyuki, 2-chome Chiyoda-ku Tokyo 100-6150 (JP); Hattori, Yasunori, 2-chome Chiyoda-ku Tokyo 100-6150 (JP); Takeshita, Masato, 2-chome Chiyoda-ku Tokyo 100-6150 (JP); Nishida, Masakazu, 2-chome Chiyoda-ku Tokyo 100-6150 (JP); Asai, Mao, 2-chome Chiyoda-ku Tokyo 100-6150 (JP); Tsuda, Masayuki, 2-chome Chiyoda-ku Tokyo 100-6150 (JP); Tomioka, Atsuki, 2-chome Chiyoda-ku Tokyo 100-6150 (JP); Yamada, Kazuhiro, 2-chome Chiyoda-ku Tokyo 100-6150 (JP); Kamiya, Dai, 2-chome Chiyoda-ku Tokyo 100-6150 (JP); Washio, Satoshi, 2-chome Chiyoda-ku Tokyo 100-6150 (JP); Yamane, Naoki, 2-chome Chiyoda-ku Tokyo 100-6150 (JP); Murakami, Keiichi, 2-chome Chiyoda-ku Tokyo 100-6150 (JP)
(74) Representative: Hoffmann Eitle

(56) References cited:
- US-A1- 2001 056 462
- US-A1- 2002 143 896
- US-B1- 6 366 947
- "Applet Caching in Java Plug-in" JAVA.SUN.COM, August 2000 (2000-08), XP002256443

## Description

### Technical Field

The present invention relates to a method for using contents.

### Background Art

In XP-002256443, Applet Caching in Java Plug-in, there is described an approach that ensures that applets are not unnecessarily downloaded by a browser every time a user references them. It is described that larger applets can often get flushed from the cache to make room for other documents as the browser has no knowledge that an applet file might be needed in the future. In view of this, there is introduced an alternative form of applet caching which allows an applet deployer to decide her applet should stay on the disk in a secondary cache which the browser cannot overwrite. Therefore, applets get downloaded only when they are updated on their server. Otherwise, the applet is always available for quick loading.

In recent years, various systems have been developed which make it possible for a user of a communication device to download via the Internet, a variety of contents such as game software, from a server. In such contents downloading systems, when a user instructs a communication device to download contents, the contents are downloaded to the device and stored in the memory of the device. After storing the contents, it is possible for a user to use the contents.

However, there is a drawback in the above described systems in that a user does not have the option of trying out contents to know what they are like before downloading and storing the contents on a communication device. This becomes problematic in the case of contents being unacceptable to the user, who has to necessarily download and store the contents and carry out a delete operation if the contents are found to be unacceptable. The above system of operations may be felt as burdensome for a user who wishes to only try out contents.

Japanese Patent Application Laid-Open Publication No. 63-14258 discloses a computer system, which upon receiving an application program (contents) from a host computer, automatically starts the application without having to receive an instruction from a user to start the application program.

According to the computer system disclosed in the publication, a user can try out contents readily; however, a user must still direct the deletion of the contents.

### Summary

The present invention has been made in view of the circumstances stated above, and provides a method for making it more convenient for a user to try out contents.

To solve the above problems, the present invention provides a communication device according to claim 1, comprising: operation means; cache memory means; content storage means composed of non-volatile memory; receiving means for receiving contents by executing a browser software; first writing means, when the receiving means receives contents, for writing the contents in a free space or a space, where some data is already stored, of the cache memory means; content using means, after the first writing means writes contents in the cache memory means, for processing or executing the contents; and second writing means, when a command is issued using the operation means for storing contents processed or executed by the content using means, for writing the contents in the content storage means after reading the contents from the cache memory means; wherein the receiving means receives trial information indicating that the contents are contents for trial use; the first writing means, when the receiving means receives the trial information, writes the contents in the free space or the space, where some data is already stored, of the cache memory means; and the content that that has been written in the cache memory means is deleted upon exit from the browser software.

In a preferred embodiment, the second writing means may comprise determining means for determining whether a size of data readable in a free space of the content storage means is equal to or more than a data size of the contents stored in the cache memory means; and when the determining means determines that the size of data readable in the free space of the content storage means is equal to or more than the size of data of the contents stored in the cache memory means, the second writing means may write in the content storage means the contents processed or executed by the content using means after reading the contents from the cache memory means.

In another preferred embodiment, the writing means may comprise inquiring means, when the determining means determines that the size of data readable in the size of free space of the content storage means is smaller than the size of data of the contents stored in the cache memory means, for prompting a user to delete one or more contents stored in the content storage means; and when, in response to the prompting of the inquiring means, a command is issued by using the operation means for deleting one or more contents stored in the content storage means, the second writing means may reserve a free space in the content storage means by making it impossible to read the contents from the content storage means and making a space in the content storage means storing the contents available for storing new data, and cause the determining means to make a determination.

The present invention provides a program product according to claim 4 for causing a computer having operation means, cache memory means, and content storage means composed of non-volatile memory, to execute: a receiving process of receiving contents by executing a browser software; a first writing process, when contents are received in the receiving process, of writing the contents in a free space or a space where some data is already stored, of the cache memory means; a content using process, after contents are written in the cache memory means in the first writing process, of processing or executing the contents; and a second writing process, when a command is issued using the operation means for storing contents processed or executed in the content using process, of writing the contents in the content storage means after reading the contents from the cache memory means, wherein said receiving process receives trial information indicating that said contents are contents for trial use; said first writing process, when said receiving process receives said trial information, writes said contents in said free space or said space, where some data is already stored, of said cache memory means, and said content that that has been written in the cache memory means is deleted upon exit from said browser software. The program may be provided through a computer readable storage medium storing the program.

In the present invention, when contents are received, the contents are written in a free space or a space where some data is already stored, of cache memory means. When contents are written in the cache memory means, the contents are processed or executed. When a command is issued using operation means for storing contents processed or executed, the contents are read from the cache memory means, and written in content storage means.

The present invention makes it more convenient for a user to try out contents.

### Brief Description of the Drawings

Fig. 1 is a block diagram showing an example of the configuration of communication system 1 according to an embodiment of the present invention.
Fig. 2 is a diagram showing an example of a list page displayed in liquid crystal display unit 405 of mobile phone 40 according to the embodiment.
Fig. 3 is a diagram showing the contents of an explanatory file according to the embodiment
Fig. 4 is a diagram showing an example of an explanatory page displayed in liquid crystal display unit 405 of mobile phone 40 according to the embodiment.
Fig. 5 is a diagram showing an example of the data configuration of an ADF-according to the embodiment
Fig. 6 is a block diagram showing an example of the hardware configuration of mobile phone 40 according to the embodiment.
Fig. 7 is a block diagram showing an example of the Java Runtime Environment according to the embodiment.
Fig. 8 is a flowchart illustrating a speedy execution process performed by CPU 400 of mobile phone 40 according to the embodiment.
Fig. 9 is a flowchart illustrating a storage process performed by CPU 400 of mobile phone 40 according to the embodiment.
Fig. 10 is a flowchart illustrating a space freeing process performed by CPU 400 of mobile phone 40 according to the embodiment.

### Description of Preferred Embodiments

Following is a description of one preferred embodiment according to the present invention with reference to the attached drawings. In the drawings, like elements are denoted by like numerals. It is intended that the preferred embodiment be regarded as illustrative rather than limiting, and can be changed within the scope of the present invention

### 1. Configuration

### Configuration of Communication System 1:

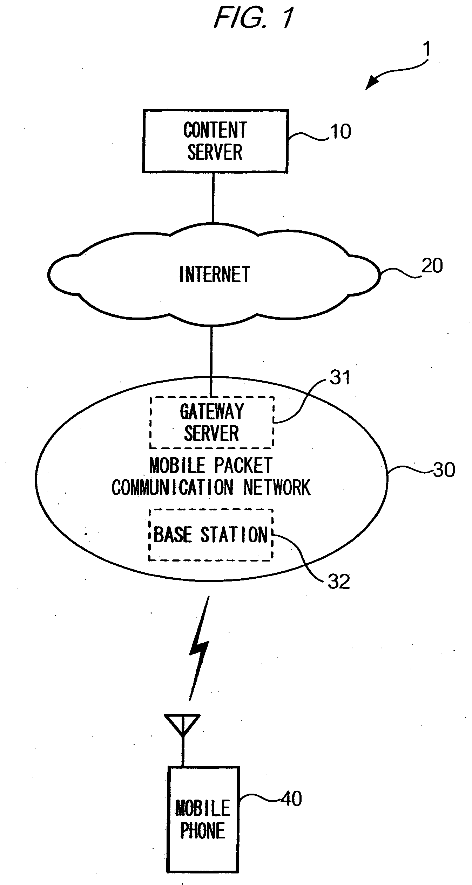

Fig. 1 is a block diagram showing the configuration of communication system 1 according to the embodiment.

Mobile packet communication network 30 is a communication network for providing mobile packet communication services to mobile phone 40 served by mobile packet communication network 30. Mobile packet communication network 30 comprises gateway server 31 and base station 32. In a communication service area of mobile packet communication network 30, many base stations 32 are provided. Mobile phone 40, when located in a radio cell covered by base station 32, can perform radio communication with base station 32.

Gateway server 31 relays data between mobile packet communication network 30 and Internet 20.

Mobile phone 40 and content server 10 perform Hyper Text Transfer Protocol (HTTP) communication via Internet 20 and mobile packet communication network 30.

### Configuration of Content Server 10:

Following is a description of the configuration of content server 10. The configuration of content server 10 is similar to that of common computers, therefore, only the configuration according to the present invention is described.

Content server 10 stores Java (registered trademark) AP software. Java AP software is software for enabling an application to be executed, and comprises a Java Archive (JAR) file containing a program written in the Java programming language and an Application Descriptor File (ADF) where information on the JAR file is described.

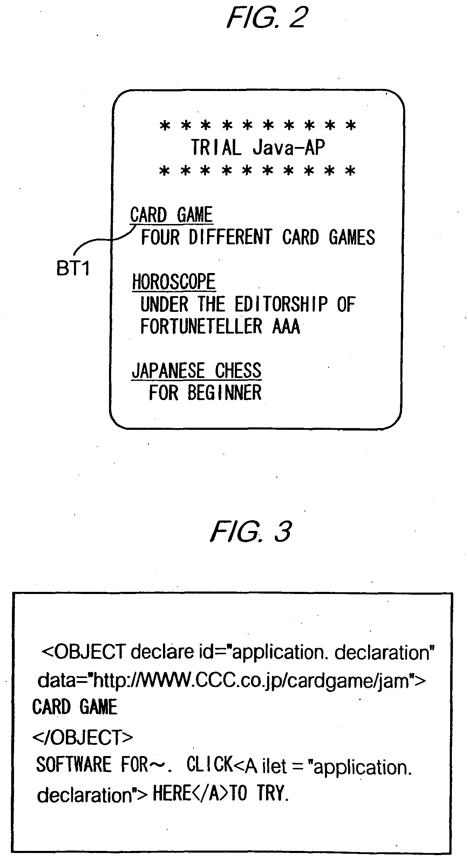

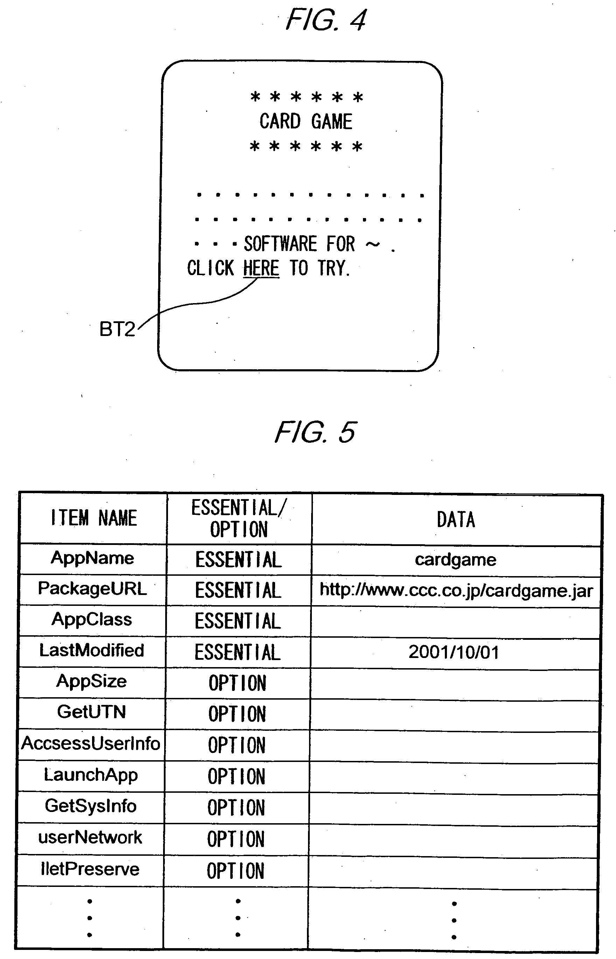

Content server 10 also stores an explanatory file associated with Java AP software stored therein. The contents of an explanatory file are shown in Fig. 3. As shown in Fig. 3, in a case where Java AP software is Java AP software for trial use (hereinafter, referred to as "a trial AP"), ilet property is specified in an anchor tag (tag beginning with "<A"). When button BT2 shown in Fig. 4 is clicked, an object tag (tag beginning with "<OBJECT") is specified whose id property includes the value specified as the ilet property in the anchor tag. A URL (http://WWW.CCC.co.jp/cardgame/jam) specified as the data property of the object tag indicates a location for storing an ADF constituting the trial AP. It should be noted that, in a case where the Java AP software is not a trial AP, ijam property is specified in the anchor tag instead of ilet property. The explanatory file is written so as to provide the explanatory page shown in Fig. 4 when interpreted and executed by mobile phone 40.

Content server 10 also has a function of sending Java AP software to mobile phone 40. Content server 10, upon receiving from mobile phone 40 an HTTP request message requesting Java AP software, reads an ADF constituting the Java AP software. Content server 10 then generates an HTTP response message including the read ADF, and sends it to mobile phone 40. Content sever 10, upon receiving from mobile phone 40 an HTTP request message requesting the JAR file corresponding to the ADF, reads the JAR file. Content server 10 then generates an HTTP response message including the read JAR file, and sends it to mobile phone 40.

Following is a description of an ADF.

An ADF is a text file where a variety of control information is written for controlling the functions of storage, start, and network access, etc. of a JAR file. The data configuration of an ADF is shown in Fig. 5. In the "Item Name" column of Fig. 5, names of control information are listed. In the "Essential/Option" column, information indicating whether essential or optional for an ADF is listed. In the "Data" column, information on control information is itlet.

Following is a brief description of each item of control information according to the embodiment. "AppName" is control information indicating the name of Java AP software, and information indicating the name is shown in the "Data" column of "AppName". "PackageURL" is control information indicating the Uniform Resource Locator (URL) of a location accessed for downloading a JAR file, and the URL of a location accessed for downloading a JAR file is shown in the "Data" column of "PackageURL". "AppSize" is control information indicating the size of data of a JAR file, and the size of data is shown in the "Data" column of "AppSize".

"IletPreserve" is storage control information indicating that Java AP software cannot be stored in mobile phone 40. In a case where an ADF contains "IletPreserve", the ADF cannot be stored. On the other hand, in a case where an ADF does not contain "IletPreserve", the ADF can be stored.

The above control information is set by content provider providing Java AP software. Description is made later of an environment where the Java AP software stated above is executed in mobile phone 40. Configuration of Mobile Phone 40:

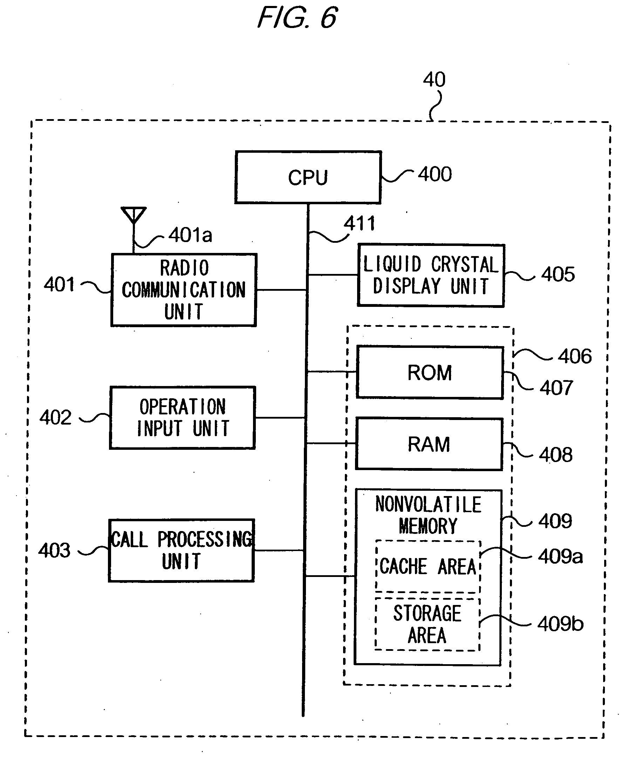

Following is a description of the configuration of mobile phone 40 with reference to Fig. 6. The configuration of mobile phone 40 is similar to that of common computers, therefore, only the configuration according to the present invention is described.

CPU 400 controls components of mobile phone 40 by executing a variety of programs stored in storage unit 406.

Storage unit 406 comprises Read Only Memory (ROM) 407, Random Access Memory (RAM) 408, and nonvolatile memory 409 such as an Electrically Erasable Programmable ROM (EEPROM).

ROM 407 stores programs such as an operating system for mobile phone 40, World Wide Web (WWW) browser software executed for downloading Java AP software, and software for establishing a runtime environment of Java AP software described later.

Nonvolatile memory 409 stores Java AP software, a variety of programs, and a variety of data. In nonvolatile memory 409, cache area 409a and storage area 409b are reserved for storing Java AP software.

Cache area 409a stores Java AP software downloaded from content server 10 for trial use in mobile phone 40. Java AP software stored in cache area 409a, upon exit from a program executed by CPU 400 for downloading the software, is deleted by CPU 400 from cache area 409a. It should be noted that deletion of Java AP software specifically means that a memory area for storing the software is cleared, therefore it becomes impossible to read the software, and the memory area becomes available for storing new data.

Storage area 409b stores Java AP software downloaded from content server 10, storage in mobile phone 40 which is instructed on the basis of storage control information and an instruction from a user. Java AP software stored in storage area 409b, unless a user of mobile phone 40 directs the deletion of the software, remains stored in storage area 409b.

Nonvolatile memory 409 also stores a program to be executes when CPU 400 performs a speedy execution process. The speedy execution process is carried out as described below. CPU 400, when acquiring an ADF constituting Java AP software from content server 10, determines whether ilet property is specified in an anchor tag indicating the URL of the location for storing the ADF. When it is determined that ilet property is specified in the anchor tag, CPU 400 identifies an object tag whose rid property includes the value specified as the ilet property in the anchor tag, and extracts the URL specified as data property of the object tag. CPU 400 then requests content server 10 to send the ADF specified by the, URL. CPU 400, upon receiving the ADF, stores it in cache area 409a, and requests a server, accessed for downloading a JAR file specified by data of "PackageURL" of the ADF, to send the JAR file. CPU 400, upon receiving the JAR file from the server, stores it in cache area 409a, and executes a trial AP comprising the ADF and the JAR file without waiting for an instruction from a user.

Nonvolatile memory 409 also stores a program to be executed when CPU 400 performs a storage process. The storage process is described below. CPU 400, after performing the aforementioned speedy execution process of a trial AP, determines whether an ADF constituting the trial AP contains "IletPreserve". When it is determined that the ADF does not contain "IletPreserve", CPU 400 determines the size of data that can be stored in a free space of storage area 409b, and compares the size of the free space with the total size of the data of the JAR file specified by data of "AppSize" of the ADF and the size of the data of the ADF (hereinafter, referred to as "the size of an AP to be stored"). When it is determined that the size of the free space is equal to or more than the size of the AP to be stored, CPU 400 stores the trial AP in storage area 409b. When it is determined that the size of the free space is smaller than the size of the AP to be stored, CPU 400 lets a user select Java AP software to be deleted out of Java AP software stored in storage area 409b. When it is determined that the total size of the free space and the size of the data of selected Java AP software is equal to or more than the size of the AP to be stored, CPU 400 stores the trial AP in storage area 409b.

### Java Runtime Environment:

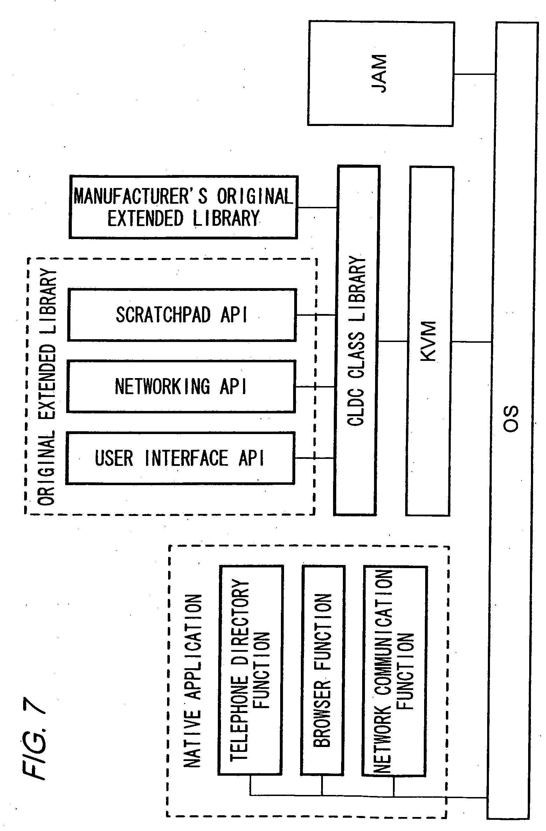

Fig. 7 is a diagram showing a runtime environment of Java AP software stored in mobile phone 40. As software for establishing the runtime environment of Java AP software, mobile phone comprises the K Virtual Machine (KVM) and the Java 2 Micro Edition (J2ME) composed of the Connected Limited Device Configuration (CLDC) as a configuration and an original Java extended profile developed by a communication carrier as a profile.

A Java Application Manager (JAM) is software for causing CPU 400 to manage Java AP software stored in mobile phone 40 under the control of an operating system. CPU 400, in accordance with instructions from the JAM, carries out the functions of displaying a list of Java AP software stored in storage area 409b, of managing execution (start or forced termination, etc.) of Java AP software, of storing or modifying Java AP software, and of deleting Java AP software stored in mobile phone 40.

As a result of executing the above software by CPU 400, a runtime environment for Java AP software is established. In such a runtime environment, when CPU 400 executes Java AP software, the function of the software is realized.

### 2. Operation

Following is a description of operations of the embodiment with reference to the drawings.

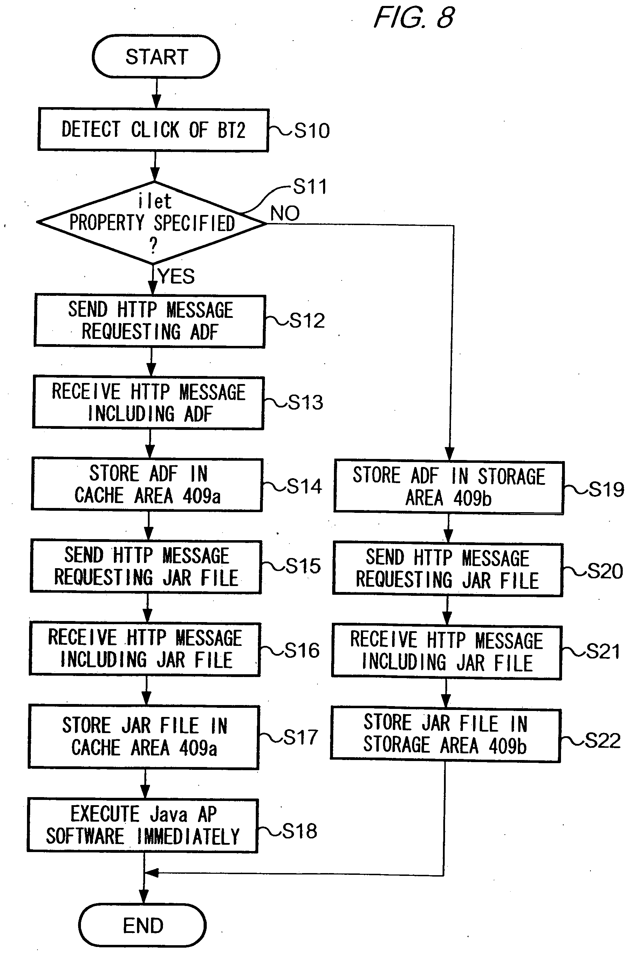

Fig. 8 is a flowchart illustrating a speedy execution process performed by CPU 400 of mobile phone 40.

When a user instructs WWW browser software to start by operating operation input unit 402 of mobile phone 40, CPU 400 executes the WWW browse software. CPU 400 performs operations in accordance with instructions from the WWW browser software, as described below. When a user accesses content server 10 by inputting the URL of content server 10, CPU 400 starts to communicate with content server 10. `When a list file (not shown) is received from content servery, CPU 400 interprets and executes the list file, and causes liquid crystal, display unit 405 to display the list page as shown in Fig. 2. The list page of Fig. 2 lists names of Java AP, software. When the user clicks button BT1 on the list page indicating the name of desired Java AP software using operation input unit 402 (in this operation example, it is assumed that the item "Card Game" is clicked), CPU 400 detects the click of button BT1, requests content server 10 to send the explanatory file as shown in Fig. 3 corresponding to the Java AP software. When the explanatory file is received from content server 10, CPU 400 interprets and executes the explanatory file, and causes liquid crystal display unit 405 to display the explanatory page as shown in Fig. 4.

When the user clicks button BT2 on the explanatory page using operation input unit 402, CPU 400 detects the click of button BT2 (Step S10), and determines whether ilet property is specified in the anchor tag described in the explanatory file corresponding to button BT2 (Step S11). When it is assumed that ilet property is specified in the anchor tag, CPU 400 determines that the Java AP software is a trial AP. CPU 400 identifies an object tag whose id property includes the value data specified as the ilet property in the anchor tag, and extracts the URL specified as data property of the object tag. CPU then sends an HTTP request message requesting the ADF specified by the URL to content server 10 via mobile packet communication network 30 and Internet 20 (Step S12).

Content server 10, upon receiving the HTTP request message, reads the ADF requested by the message. Content server 10 generates an HTTP response message including the read ADF, and sends it to mobile phone 40.

CPU 400 of mobile phone 40, upon receiving the HTTP response message (Step S 13), on the basis of the contents of the ADF included in the message, determines whether it is possible to download Java AP software comprising the ADF. In this operation example, it is assumed that mobile phone 40 is capable of downloading the Java AP software; therefore, CPU 400 determines that it is possible to download the Java AP software. CPU 400 stores the ADF in cache area 409a temporarily (Step S 14). CPU 400 extracts the PackageURL of the ADF; generates an HTTP request message requesting the JAR file specified by the PackageURL; and sends it to content server 10 (Step S15).

Content server 10, upon receiving the HTTP request message, generates an HTTP response message including the JAR file requested by the request message, and sends it to mobile phone 40.

CPU 400 of mobile phone 40, upon receiving the HTTP response message (Step S16), stores the JAR file included in the message in cache area 409a temporarily (Step S 17).

CPU 400 executes the Java AP software composed of the ADF and the JAR file immediately without waiting for an instruction from the user (Step S18). Then, the function of the Java AP software is realized in mobile phone 40.

When it is determined in Step 11 that ilet property is not specified in the anchor tag, CPU 400 stores the Java AP software in storage area 409b (Step S19). CPU 400 carries out the processes of Steps S20 and S21, which are similar to those of Steps S15 and S16, and stores the received JAR file in cache area 409b (Step S22).

After the process of Step 18, when the user directs termination of the running Java AP software using operation input unit 402 of mobile phone 40, CPU 400 terminates the running software.

CPU 400 determines by referring to the ADF of the Java AP software whether the ADF does not contain "IletPreserve" (Step S30). When it is determined that the ADF does not contain "IletPreserve"; namely, that the Java AP software can be stored in mobile phone 40, CPU 400 causes liquid crystal display unit 405 to display a message saying "Is an application stored?" (Step S31).

When the user directs storage of the Java AP software by operating operation input unit 402 of mobile phone 40, CPU 400 detects the operation (Step S32), and reads from the ADF constituting the software the size of the data of the JAR file indicated by data of "AppSize" of the ADF. CPU 400 compares the size of the data of the JAR file with the size of the free space of storage area 409b (Step S33). When it is determined that the size of the data of the JAR file is smaller than the size of the free space, CPU 400 stores the Java AP software in cache area 409b (Step S34).

When it is determined in Step S33 that the size of the data of the JAR file is more than the size of the free space, CPU 400 carries out the space freeing process, as described below (Step S35).

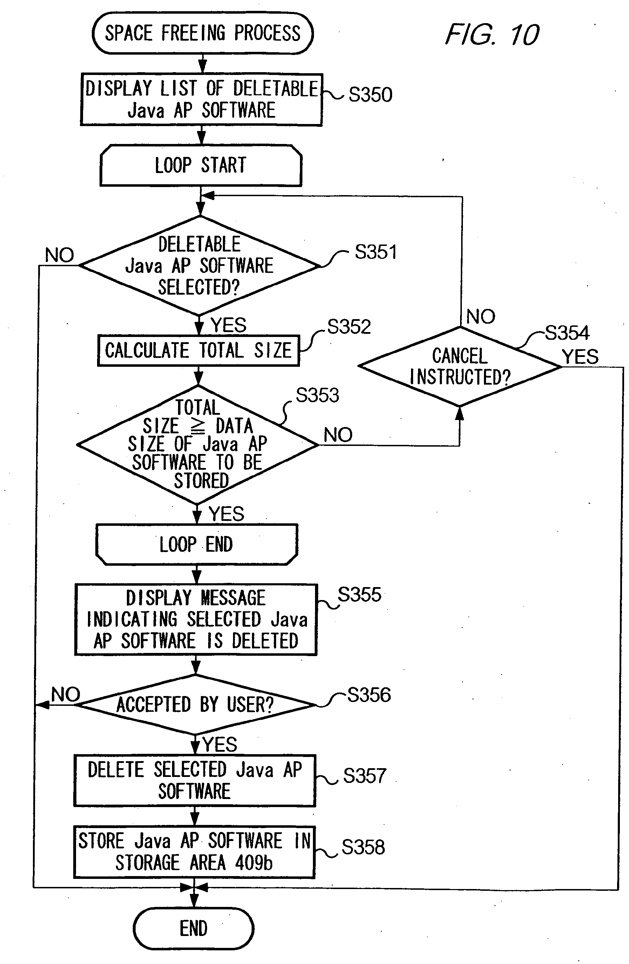

Fig. 10 is a flowchart illustrating the space freeing process.

CPU 400, in accordance with instructions from the JAM, causes liquid crystal display unit 405 to display a list of Java AP software stored in storage area 409b, and a message saying "If you delete any of Java AP software on the list, you can store this Java AP software" (Step S350).

When the user selects the Java AP software to be deleted, by operating operation input unit 402 of mobile phone 40, CPU 400 detects the operation (Step S351), and determines the size of the data of .the selected software. CPU 400 calculates the total size of the data and the size of the free space of storage area 409b (hereinafter, referred to as "the total size") (Step S352). CPU 400 then compares the total size with the size of the data of the JAR file (Step S353). When it is determined that the total size is equal to or more than the size of the data of the JAR file, CPU 400 causes liquid crystal display unit 405 to display the name of the selected Java AP software to be deleted, and a message asking "Is it ok to delete the Java AP software?" (Step S355).

When the user directs deletion of the Java AP software by operating operation input unit 402 of mobile phone 40, CPU 400 detects the operation (Step S356), and deletes the software from storage area 409b (Step S357). CPU 400 stores in cache area 409b the Java AP software to be stored (Step S358).

When it is determined in Step S353 that the total size is smaller than the size of the data of the JAR file, CPU 400 causes liquid crystal display unit 405 to display a message saying "The size of the free space is still insufficient. Please select other Java AP software to be deleted". The processes of Steps S351 to S354 are repeated, until the total size of Java AP software to be deleted is equal to or more than the size of the data of the JAR file, or until CPU 400 detects that the user has directed the cancellation of the storage process in Step S354.

As described above, CPU carries out the storage process.

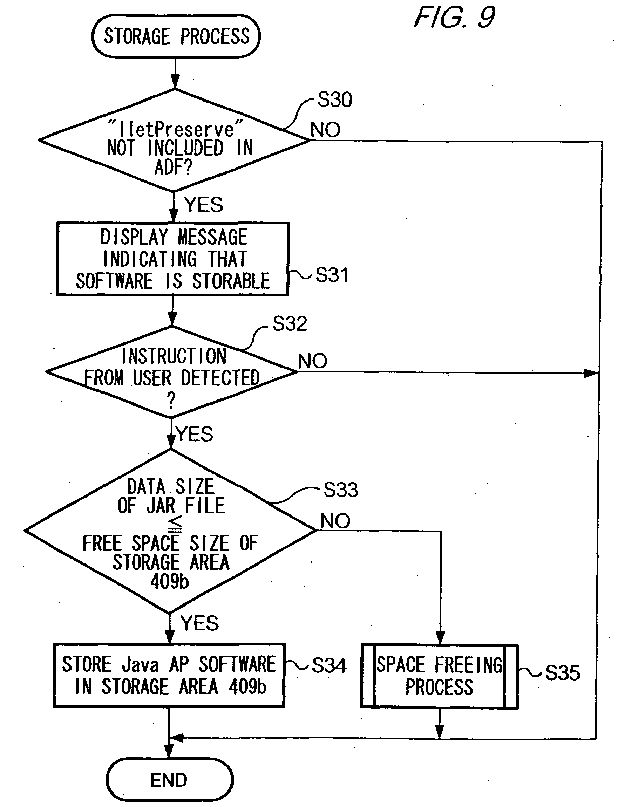

When it is determined in Step S30 in Fig. 9 that the ADF contains "IletPreserve"; namely, that the Java AP software cannot be stored in mobile phone 40, the storage process as described above is not carried out for the Java AP software.

When the user directs termination of the WWW browser software using operation input unit 402 of mobile phone 40, CPU 400 terminates the software, and deletes contents stored in cache area 409a.

When the user desires to execute Java AP software stored in storage area 409b, he/she, by operating operation input unit 402 of mobile phone 40, provides an instruction requesting liquid crystal display unit 405 to display a list of Java AP software stored in storage area 409b. CPU 400, upon receiving the instruction, causes liquid crystal display unit 405 to display a list of Java AP software stored in storage area 409b, in accordance with instructions from the JAM. When the user directs execution of the desired Java AP software, CPU 400 reads the software from storage area 409b, and executes it. Subsequently, the function of the Java AP software is realized in mobile phone 40.

Java AP software stored in storage area 409b remains stored in storage area 409b, unless the user deletes the software.

With the above configuration, a user can readily try Java AP software in mobile phone 40. After trying Java AP software, the user can also store the software in mobile phone 40 on the basis of the presence or the absence of storage control information and at the will of the user. In a case where the size of the free space of mobile phone 40 is insufficient for storing the Java AP software, the user can store the software by deleting other Java AP software stored in mobile phone 40.

In the embodiment, information indicating that Java AP software is a trial AP is specified in an anchor tag of the explanatory file, which is referred to for downloading the ADF constituting the Java AP software. With the above configuration, it becomes unnecessary to modify the Java AP software itself when the software is set as a trial AP.

### 3. Modifications

In the foregoing, the embodiment of the present invention has been described. The embodiment is intended to be illustrative, and the present invention can be implemented in various other embodiments without departing from the main characteristic of the invention. For example, modifications such as the following are possible.

### Modification 1:

In the above embodiment, content server 10 may be directly connected via a dedicated line instead of Internet 20, with gateway server 31 in mobile packet communication network 30. Content server 10 also may be provided within mobile packet communication network 30. Gateway server 31 may have the function of content server 10.

In the above embodiment, files may be exchanged using the HTTPS, instead of the HTTP, to assure higher security.

### Modification 2:

In the above embodiment, Java AP software written in the Java programming language is treated as contents. However, a programming language is not limited to the Java programming language, and may be the C++ language, etc.

Contents may be image data, video data, music data, or document data such as HTML data, instead of software. To enable mobile phone 40 to use the above contents, mobile phone 40 is configured to comprise a program and a unit for processing image data, video data, or music data, and a program for interpreting and displaying document data in liquid crystal display unit 405. Mobile phone 40 is also configured to receive from content server 10, information on the size of the data of contents, which is referred to in the storage process of the above embodiment, before downloading the contents.

### Modification 3:

In the above embodiment, Java AP software is downloaded from content server 10 to mobile phone 40; however, Java AP software may be delivered from content server 10 to mobile phone 40.

### Modification 4:

In the above embodiment, in nonvolatile memory 409 of mobile phone 40, cache area 409a and storage area 409b may not be assigned. CPU 400, when storing in nonvolatile memory 409 Java AP software downloaded from content server 10, associates with the software storage identification data (for example, a memory flag "0") indicating that the software is stored temporarily. In the storage process as shown in Fig. 9, when a user directs storage of Java AP software, the software is not deleted from nonvolatile memory 409, but the storage identification data corresponding to the software is modified to storage identification data indicating that the software is stored enduringly (for example, the memory flag is modified from "0" to "1"). On the other hand, when the user does not direct storage of the software, after a running WWW browser software is terminated, the software associated with the memory flag "0" is deleted from nonvolatile memory 409.

With the above configuration, areas of nonvolatile memory 409 for storing Java AP software can be used effectively.

### Modification 5:

In the above embodiment, Java AP software is associated with trial information indicating that the software is contents for trial use, by specifying ilet property in an anchor tag described in an explanatory file. However, it is possible that Java AP software is not associated with such trial information. In this case, CPU 400 of mobile phone 40, after downloading Java AP software from content server 10, stores the software in cache area 409a, and performs the aforementioned speedy execution process of the software.

### Modification 6:

Software such as JAM software or operating system software executed by CPU 400 of mobile phone 40 in the above embodiment can be provided to mobile phone 40 through a CPU 400 readable storage medium storing the software such as a magnetic recording medium, a magneto-optical recording medium, or ROM. The software also can be downloaded to mobile phone 40 via Internet 20.

## Claims

1. A communication device (40), comprising:
operation means (402);
cache memory means (409a);
content storage means composed of non-volatile memory (409) ;
receiving means (401) for receiving contents by executing a browser software;
first writing means (400), when said receiving means (401) receives contents, for writing said contents in a free space or a space, where some data is already stored, of said cache memory means (409a);
content using means (400), after said first writing means writes contents in said cache memory means, for processing or executing said contents; and
second writing means (400), when a command is issued using said operation means (402) for storing contents processed or executed by said content using means (400), for writing said contents in said content storage means after reading said contents from said cache memory means (409a);
***characterized in that***
said receiving means (401) receives trial information indicating that said contents are contents for trial use;
said first writing means (400), when said receiving means (401) receives said trial information, writes said contents in said free space or said space, where some data is already stored, of said cache memory means (409a) ; and
the content that has been written in the cache memory means (409a) is deleted upon exit from the browser software.

2. A communication device according to claim 1, wherein said second writing means (400) comprises determining means for determining whether a size of data readable in a free space of said content storage means is equal to or more than a data size of said contents stored in said cache memory means (409a); and
when said determining means determines that said size of data readable in said free space of said content storage means is equal to or more than said size of data of said contents stored in said cache memory means (409a), said second writing means (400) writes in said content storage means said contents processed or executed by said content using means (400) after reading said contents from said cache memory means (409a).

3. A communication device according to claim 2, wherein said second writing means (400) comprises inquiring means, when said determining means determines that said size of data readable in said size of free space of said content storage means is smaller than said size of data of said contents stored in said cache memory means, for prompting a user to delete one or more contents stored in said content storage means; and
when, in response to said prompting of said inquiring means, a command is issued by using said operation means (402) for deleting one or more contents stored in said content storage means, said second writing means (400), reserves a free space in said content storage means by making it impossible to read said contents from said content storage means and making a space in said content storage means storing said contents available for storing new data, and causes said determining means to make a determination.

4. A program product for causing a computer having operation means, cache memory means, and content storage means composed of non-volatile memory, to execute:
a receiving process of receiving contents by executing a browser software;
a first writing process, when contents are received in said receiving process, of writing said contents in a free space or a space where some data is already stored, of said cache memory means (409a);
a content using process, after contents are written in said cache memory means (409a) in said first writing process, of processing or executing said contents; and
a second writing process, when a command is issued using said operation means (402) for storing contents processed or executed in said content using process, of writing said contents in said content storage means after reading said contents from said cache memory means (409a); wherein
said receiving process receives trial information indicating that said contents are contents for trial use;
said first writing process, when said receiving process receives said trial information, writes said contents in said free space or said space, where some data is already stored, of said cache memory means (409a);
the content that has been written in the cache memory means (409a) is deleted upon exit from the browser software.

## Patentansprüche

1. Kommunikationsvorrichtung (40), umfassend:
ein Betriebsmittel (402);
ein Cachespeichermittel (409a);
ein Inhaltsspeichermittel, aufgebaut aus nichtflüchtigem Speicher (409);
ein Empfangsmittel (401) zum Empfangen von Inhalten durch Ausführen einer Browser-Software;
ein erstes Schreibmittel (400), wenn das Empfangsmittel (401) Inhalte empfängt, zum Schreiben der Inhalte in einen freien Platz oder einen Platz, wo einige Daten bereits gespeichert sind, des Cachespeichermittels (409a);
ein Inhaltsverwendungsmittel (400), nachdem das erste Schreibmittel die Inhalte in das Cachespeichermittel schreibt, zum Verarbeiten oder Ausführen der Inhalte; und
ein zweites Schreibmittel (400), wenn ein Befehl unter Verwendung des Betriebsmittels (402) gegeben wird, zum Speichern von Inhalten, die von dem Inhaltsverwendungsmittel (400) verarbeitet oder ausgeführt werden, zum Schreiben der Inhalte in das Inhaltsspeichermittel, nachdem die Inhalte von dem Cachespeichermittel (409a) gelesen wurden,
***dadurch gekennzeichnet, dass***
das Empfangsmittel (401) Prüfungsinformationen empfängt, die anzeigen, dass die Inhalte Inhalte zur Prüfungsverwendung sind;
das erste Schreibmittel (400), wenn das Empfangsmittel (401) die Prüfungsinformationen empfängt, die Inhalte in den freien Platz oder den Platz, wo einige Daten bereits gespeichert sind, des Cachespeichermittels (409a) schreibt; und
der Inhalt, der in das Cachespeichermittel (409a) geschrieben wurde, nach dem Verlassen der Browser-Software gelöscht wird.

2. Kommunikationsvorrichtung nach Anspruch 1, wobei das zweite Schreibmittel (400) ein Bestimmungsmittel zum Bestimmen umfasst, ob eine Größe von Daten, die in einem freien Platz des Inhaltsspeichermittels lesbar sind, gleich groß wie oder mehr ist als eine Datengröße der Inhalte, die in dem Cachespeichermittel (409a) gespeichert sind; und
wenn das Bestimmungsmittel bestimmt, dass die Größe der Daten, die in dem freien Platz des Inhaltsspeichermittefs lesbar sind, gleich groß wie oder mehr ist als die Datengröße der Inhalte ist, die in dem Cachespeichermittel (409a) gespeichert sind, das zweite Schreibmittel (400) in das Inhaltsspeichermittel die Inhalte schreibt, die von dem Inhaltsverwendungsmittel (400) verarbeitet oder ausgeführt wurden, nachdem die Inhalte von dem Cachespeichermittel (409a) gelesen wurden.

3. Kommunikationsvorrichtung nach Anspruch 2, wobei das zweite Schreibmittel (400) ein Abfragemittel umfasst, wenn das Bestimmungsmittel bestimmt, dass die Größe der Daten, die in der Größe des freien Platzes des Inhaltsspeichermittels lesbar sind, kleiner ist als die Größe der Daten der Inhalte, die in dem Cachespeichermittel gespeichert sind, zum Auffordern eines Benutzers, einen oder mehrere Inhalte zu löschen, die in dem Inhaltsspeicher gespeichert sind; und
wenn, in Antwort auf das Auffordern des Abfragemittels, indem das Betriebsmittel (402) verwendet wird, ein Befehl zum Löschen eines oder mehrerer Inhalte gegeben wird, die in dem Inhaltsspeichermittel gespeichert sind, das zweite Schreibmittel (400) einen freien Platz in dem Inhaltsspeichermittel reserviert, indem es es unmöglich macht, Inhalte aus dem Inhaltsspeichermittel zu lesen und einen Platz in dem Inhaltsspeichermittel, der die Inhalte speichert, zum Speichern von neuen Daten verfügbar macht, und dass es veranlasst, dass das Bestimmungsmittel eine Bestimmung durchführt.

4. Computerprogrammprodukt, um einen Computer mit einem Betriebsmittel, einem Cachespeichermittel und einem Inhaltsspeichermittel, das aus nichtflüchtigem Speicher aufgebaut ist, dazu zu veranlassen, auszuführen:
einen Empfangsprozess des Empfanges von Inhalten, indem eine Browser-Software ausgeführt wird;
einen ersten Schreibprozess, wenn Inhalte in dem Empfangsprozess empfangen werden, des Schreibens der Inhalte in einen freien Platz oder einen Platz, wo einige Daten bereits gespeichert sind, des Cachespeichermittels (409a);
einen Inhaltsverwendungsprozess, nachdem die Inhalte in das Cachespeichermittel (409a) in dem ersten Schreibprozess geschrieben wurden, des Verarbeitens oder Ausführens der Inhalte; und
einen zweiten Schreibprozess, wenn ein Befehl unter Verwendung des Betriebsmittels (402) zum Speichern von Inhalten gegeben wird, die in dem Inhaltsverwendungsprozess verarbeitet oder ausgeführt werden, des Schreibens der Inhalte in das Inhaltsspeichermittel, nachdem die Inhalte von dem Cachespeichermittel (409a) gelesen wurden; wobei
der Empfangsprozess Prüfungsinformationen empfängt, die anzeigen, dass die Inhalte Inhalte zur Prüfungsverwendung sind;
der erste Schreibprozess, wenn der Empfangsprozess die Prüfungsinformationen empfängt, die Inhalte in den freien Platz oder den Platz, wo einige Daten bereits gespeichert sind, des Cachespeichermittels (409a) schreibt;
der Inhalt, der in das Cachespeichermittel (409a) geschrieben wurde, nach dem Verlassen der Browser-Software gelöscht wird.

## Revendications

1. Dispositif de communication (40), comprenant :
un moyen d'opération (402) ;
un moyen de mémoire cache (409a) ;
un moyen de stockage de contenus composé d'une mémoire non-volatile (409) ;
un moyen de réception (401) pour recevoir des contenus en exécutant un logiciel de navigateur;
un premier moyen d'écriture (400), lorsque ledit moyen de réception (401) reçoit des contenus, pour écrire lesdits contenus dans un espace libre ou un espace, où certaines données sont déjà stockées, dudit moyen de mémoire cache (409a) ;
un moyen d'utilisation de contenus (400), après que ledit premier moyen d'écriture ait écrit des contenus dans ledit moyen de mémoire cache, pour traitement ou exécution desdits contenus ; et
un second moyen d'écriture (400), lorsqu'une commande est émise en utilisant ledit moyen d'opération (402) pour stocker des contenus traités ou exécutés par ledit moyen d'utilisation de contenus (400), pour écrire lesdits contenus dans ledit moyen de stockage de contenus après lecture desdits contenus à partir dudit moyen de mémoire cache(409a);
***caractérisé en ce que***
ledit moyen de réception (401) reçoit des informations d'essai indiquant que lesdits contenus sont des contenus pour une utilisation à l'essai ;
ledit premier moyen d'écriture (400), lorsque ledit moyen de réception (401) reçoit lesdites informations d'essai, écrit lesdits contenus dans ledit espace libre ou ledit espace, où certaines données sont déjà stockées, dudit moyen de mémoire cache (409a) ; et
le contenu qui a été écrit dans le moyen de mémoire cache (409a) est supprimé lors d'une sortie du logiciel de navigateur.

2. Dispositif de communication selon la revendication 1, dans lequel ledit second moyen d'écriture (400) comprend une détermination d'un moyen pour déterminer si une taille de données lisibles dans un espace libre dudit moyen de stockage de contenus est égale ou supérieure à une taille de données desdits contenus stockés dans ledit moyen de mémoire cache (409a) ; et
lorsque ledit moyen de détermination détermine que ladite taille de données lisibles dans ledit espace libre dudit moyen de stockage de contenus est égale ou supérieure à ladite taille de données desdits contenus stockés dans ledit moyen de mémoire cache (409a), ledit second moyen d'écriture (400) écrit dans ledit moyen de stockage de contenus lesdits contenus traités ou exécutés par ledit moyen d'utilisation de contenus (400) après lecture desdits contenus à partir dudit moyen de mémoire cache (409a).

3. Dispositif de communication selon la revendication 2, dans lequel ledit second moyen d'écriture (400) comprend un moyen d'interrogation, lorsque ledit moyen de détermination détermine que ladite taille de données lisibles dans ladite taille d'espace libre dudit moyen de stockage de contenus est inférieure à ladite taille de données desdits contenus stockés dans ledit moyen de mémoire cache, pour inviter un utilisateur à supprimer un ou plusieurs contenus stockés dans ledit moyen de stockage de contenus ; et
lorsqu'en réponse à ladite invitation dudit moyen d'interrogation, une commande est émise en utilisant ledit moyen d'opération (402) pour supprimer un ou plusieurs contenus stockés dans ledit moyen de stockage de contenus, ledit second moyen d'écriture (400) réserve un espace libre dans ledit moyen de stockage de contenus en permettant une lecture desdits contenus à partir dudit moyen de stockage de contenus et en rendant un espace dans ledit moyen de stockage de contenus stockant lesdits contenus disponible pour stocker de nouvelles données, et amène ledit moyen de détermination à faire une détermination.

4. Produit de programme pour amener un ordinateur présentant un moyen d'opération, un moyen de mémoire cache, et un moyen de stockage de contenus composé d'une mémoire non-volatile, à exécuter :
un processus de réception consistant à recevoir des contenus en exécutant un logiciel de navigateur;
un premier processus d'écriture, lorsque des contenus sont reçus dans ledit processus de réception, consistant à écrire lesdits contenus dans un espace libre, ou un espace où certaines données sont déjà stockées, dudit moyen de mémoire cache (409a) ;
un processus d'utilisation de contenus, après que des contenus aient été écrits dans ledit moyen de mémoire cache (409a) dans ledit premier processus d'écriture, consistant à traiter ou exécuter lesdits contenus ; et
un second processus d'écriture, lorsqu'une commande est émise en utilisant ledit moyen d'opération (402) pour stocker des contenus traités ou exécutés dans ledit processus d'utilisation de contenus, consistant à écrire lesdits contenus dans ledit moyen de stockage de contenus après lecture desdits contenus à partir dudit moyen de mémoire cache (409a) ; dans lequel
ledit processus de réception reçoit des informations d'essai indiquant que lesdits contenus sont des contenus pour une utilisation à l'essai ;
ledit premier processus d'écriture, lorsque ledit processus de réception reçoit lesdites informations d'essai, écrit lesdits contenus dans ledit espace libre ou ledit espace, où certaines données sont déjà stockées, dudit moyen de mémoire cache (409a);
le contenu qui a été écrit dans le moyen de mémoire cache (409a) est supprimé lors d'une sortie du logiciel de navigateur.
